# EUROPÄISCHE PATENTANMELDUNG

(11) **EP 1 073 081 A2**
(43) Veröffentlichungstag der Anmeldung: **31.01.2001**
(21) Anmeldenummer: 00113842.9
(22) Anmeldetag: 30.06.2000
(51) Int. Cl.: H01H 37/32

(54) **Linearaktuator**

(30) Priorität: 24.07.1999 DE 19934827
(71) Anmelder: Deutsches Zentrum für Luft- und Raumfahrt e.V., 51147 Köln (DE)
(72) Erfinder: Campanile, Lucio, Flavio, Dr., 38102 Braunschweig (DE); Seack, Oliver, 38114 Braunschweig (DE); Sachau, Delf, Dr., 38527 Meine (DE); Seelecke, Stefan, Dr., 14197 Berlin (DE)
(74) Vertreter: Gerstein, Hans Joachim, Dipl.-Ing.

(57) **Zusammenfassung**

Bei einem Linearaktuator (1) mit einem länglichen Aktuatorelement (2), das zur Längenänderung aus einer Formgedächtnislegierung besteht, ist das Aktuatorelement (2) in einem Gehäuse (3) frei verschiebbar gelagert und nur an einer Verbindungsstelle (5) fest mit dem Gehäuse (3) verbunden.

## Beschreibung

Die Erfindung betrifft einen Linearaktuator mit einem länglichen Aktuatorelement, wobei das Aktuatorelement zur Längenänderung aus einer Formgedächtnislegierung besteht, das Aktuatorelement in einem Gehäuse frei verschiebbar gelagert ist und nur an einer Verbindungsstelle fest mit dem Gehäuse verbunden ist.

Linearaktuatoren werden zur Erzeugung von Linearbewegungen verwendet und sind in vielfältiger Form hinlänglich bekannt. So werden zum Beispiel hydraulisch oder pneumatisch betriebene Hubzylinder zur Erzeugung von Linearbewegungen eingesetzt, bei denen ein Kolben ein veränderliches Volumen gegenüber der Umwelt abtrennt. Durch Verdrängung des Kolbens mittels eines mit Druck beaufschlagten flüssigen oder gasförmigen Mediums entsteht eine lineare Hubbewegung. Durch hohe Arbeitsdrücke und mit Hilfe von Teleskopzylindern lassen sich hohe Stellkräfte mit großen Stellwegen realisieren.

Bei hydraulischen und pneumatischen Hubzylindern besteht die Gefahr von Leckagen. Zudem ist das Druckmedium nachgiebig und Hydrauliköle unterliegen einem Verschleiß. Diese müssen aufwendig gewartet und entsorgt werden. Zudem müssen Dichtungen gewartet und ausgetauscht werden, an denen Leckagen auftreten. In bestimmten Bereichen, wie zum Beispiel der Verfahrens- oder Lebensmitteltechnik, ist ein Austreten von Hydraulikölen nicht akzeptabel, so daß für diese Aufgaben hydraulische Aktuatoren nicht einsetzbar sind.

Bei pneumatischen Aktuatoren macht sich vor allem die starke Kompressibilität des gasförmigen Druckmediums, zumeist Luft, störend bemerkbar, die zu einer geringen Steifigkeit des Aktuators führt.

Es sind weiterhin Linearaktuatoren als mechanische Lösungen in Form von Zahnstangen- und Spindelantrieben bekannt. Hierbei wird die Linearbewegung durch eine Zahnpaarung bzw. durch ein schraubenförmiges Gewinde hervorgerufen. Derartige mechanische Lösungen, bei denen mechanische Komponenten Relativbewegungen zueinander ausführen und die auf der Basis von Zahnpaarungen oder Spindelgetrieben basieren, weisen ein mehr oder weniger großes Spiel und mechanischen Verschleiß auf.

Weiterhin sind Linearaktuatoren bekannt, die mittels eines aktivierbaren Materials betrieben werden. Hierzu zählen Aktuatoren aus Piezokeramiken, elektro- und magnetostriktiven Materialien sowie aus Formgedächtnislegierungen. Aktuatoren auf der Basis von magnetostriktiven und piezokeramischen Materialien weisen nur äußerst geringe erzielbare Verformungen in der Größenordnung von 0,15 % der Aktuatorlänge auf. Für einen ausreichenden Hub des Linearaktuators sind somit große Baugrößen erforderlich.

Aktuatoren aus Formgedächtnislegierungen basieren auf dünnen Drähten, die sich durch Erwärmung um ein definiertes Maß ausdehnen bzw. zusammenziehen. Materialien mit einem sogenannten Formgedächtniseffekt sind zum Beispiel spezielle metallische Werkstoffe, wie zum Beispiel Nickel-Titan- oder Kupfer-Aluminium-Legierungen. Die Längenänderung der Formgedächtniselemente (auch SMA-Elemente genannt) beruht auf einer Änderung der Kristallstruktur, die durch eine Temperaturveränderung oder eine mechanische Beanspruchung hervorgerufen wird. Es wird bei Linearaktuatoren auf Basis von Formgedächtnislegierungen zwischen zwei Betriebsarten unterschieden, dem sogenannten "Zweiwegeffekt" und dem sogenannten "Einwegeffekt". Beim Zweiwegeffekt erinnert sich das Material an zwei eingeprägte Konfigurationen. Eine erste Konfiguration tritt bei einer niedrigen Temperatur auf, üblicherweise Raumtemperatur. Die zweite Konfiguration bzw. Ausdehnung wird oberhalb einer bestimmten kritischen Umwandlungstemperatur Tₖ eingenommen. Bei dem Einwegeffekt wird dem Material bei Umgebungstemperatur mechanisch eine bleibende Verformung aufgeprägt. Wird die Formgedächtnislegerierung über die kritische Umwandlungstemperatur Tₖ aufgeheizt, dann findet die Gefügeumwandlung ebenfalls wieder statt und das Material erinnert sich wieder an ihre ursprüngliche Form. Allerdings wird beim Abkühlen des Materials auf Raumtemperatur die zuvor mechanisch aufgeprägte Form nicht wieder eingenommen. Sie muß wiederum mechanisch aufgeprägt werden. Im Unterschied hierzu erinnert sich das Material beim Zweiwegeffekt wieder an die aufgeprägte Form, wenn die Formgedächtnislegierung auf Raumtemperatur abgekühlt wird.

Durch den Formgedächtniseffekt sind Dehnungen in der Größenordnung von bis zu 8 % der Aktuatorstablänge für den Einwegeffekt und bis zu 5 % für den Zweiwegeffekt erzielbar. Diese Werte sind dabei stark von der Zusammensetzung der Legierungen, ihrer Nachbehandlung und dem Belastungsniveau während des Betriebs abhängig.

Linearaktuatoren mit Elementen aus einer Formgedächtnislegierung haben den Vorteil, daß diese im Verhältnis zu den erzielbaren Stellkräften einen sehr geringen Energiebedarf und ein extrem geringes Volumen bei hoher Steifigkeit aufweisen. Da der Linearaktuator komplett aus festen Werkstoffen hergestellt ist, besteht das Problem von Leckagen nicht. Zudem ist der Linearaktuator gegenüber hydraulischen und insbesondere pneumatischen Aktuatoren wesentlich steifer.

Die bekannten, z.B. in der Firmenschrift der Firma TOKI BLOMETAL WIRE, Weilheim, 1987 beschriebenen Linearaktuatoren mit Formgedächtnislegierungen arbeiten mit dünnen Drähten. Hierbei liegen die Kraftanleitungs- bzw. Befestigungspunkte an den Drahtenden oder sogar noch weiter außerhalb. Zudem besteht die Gefahr des Abknickens des Aktuatordrahts. Weiterhin können keine Druckkräfte übertragen werden. Zudem sind bereits bei geringen Aktuatorhüben sehr große Drahtlängen des Formgedächtnismaterials erforderlich. Für einen Aktuator mit 100 mm Hub ist beispielsweise eine Drahtlänge von mindestens 2 m erforderlich. Die Befestigungspunkte des Aktuators müssen daher einen entsprechend großen Abstand aufweisen, der häufig in den Konstruktionen nicht realisierbar ist.

In der DE-US 30 05 470 A1 ist ein thermomechanischer Schutzschalter beschrieben, bei dem ein gewendeltes Federelement aus einer Formgedächtnislegierung besteht und in ein Gehäuse integriert ist. Das Federelement dehnt sich aus, wenn eine Grenztemperatur überschritten wird und betätigt mittels an einem an einem Ende des Federelementes angebrachten beweglichen Schaltstücks einen Schutzschalter. Nachteilig ist eine relativ stabile Feder erforderlich, uni ein Abknicken des Formgedächtnisdrahtes zu verhindern.

Aufgabe der Erfindung war es daher, einen verbesserten Linearaktuator mit einem länglichen Aktuatorelement zu schaffen, das aus einer Formgedächtnislegierung besteht.

Die Aufgabe wird durch den Linearaktuator gemäß Patentanspruch 1 dadurch gelöst, daß sich das Gehäuse parallel in Längsrichtung zum Aktuatorelement erstreckt und diesen allseitig umschließt, wobei eine Gleitlagerung zur frei verschiebbaren Lagerung des Aktuatorelementes in dem Gehäuse vorgesehen ist.

Dadurch, daß das Aktuatorelement in einem Gehäuse frei gelagert und nur an einer Stelle befestigt ist, kann der Linearaktuator an beliebiger Stelle des Gehäuses fest montiert werden, so daß der Nachteil herkömmlicher Aktuatoren umgangen wird, die an voneinander weit entfernten Punkten befestigt werden müssen. Zudem ist ein beliebig geformter Verlauf des Aktuatordrahtes außerhalb der Befestigungspunkte möglich, wobei das Gehäuse sowohl starr als auch flexibel formbar gestaltet sein kann. Die Lagerung des Aktuatorelementes in dem Gehäuse bewirkt zudem eine Knickstützung des Aktuatorelementes bzw. Aktuatordrahtes, so daß auch Druckkräfte übertragen werden können.

Die Aktivierung der Formgedächtnislegierung des Aktuatorelementes erfolgt vorzugsweise durch Temperaturerhöhung. Die Erwärmung kann dabei sowohl durch Beheizen der Formgedächtnislegierung von außen, zum Beispiel durch Konvektionswärme oder Wärmestrahlung, als auch induktiv durch Beschicken des Aktuatorelementes mit einem elektrischen Strom erfolgen, der direkt durch die Formgedächtnislegierung fließt.

Für die Erwärmung des Aktuatorelementes mit einem elektrischen Strom bildet die Gleitlagerung vorzugsweise eine elektrische Isolierschicht zwischen dem Aktuatorelement und dem Gehäuse, wobei der Strom einerseits über das Aktuatorelement und andererseits über das Gehäuse und die Verbindungsstelle in das Aktuatorelement geleitet wird.

Das Aktuatorelement kann einerseits geradlinig ausgerichtet sein, aber auch mindestens teilweise gebogen sein, so daß die Einbaulänge trotz großer Aktuatorlänge klein gehalten werden kann. Hierzu kann das Gehäuse flexibel sein.

Zum Rückstellen des Aktuatorelementes in seine Ausgangsposition ist vorzugsweise eine Rückstellvorrichtung vorgesehen. Nachdem das Aktuatorelement ausgedehnt wurde, kann es damit im Einwegbetrieb mit der Rückstellvorrichtung zurückgestellt werden. Die Rückstellvorrichtung kann zum Beispiel ein zweiter mit einer Formgedächtnislegierung betriebener Linearaktuator, eine mechanische Feder oder ähnliches sein.

Damit der Linearaktuator nicht ständig erwärmt werden muß, ist vorzugsweise eine Feststellvorrichtung zum Halten bzw. Verriegeln des Linearaktuators in einer definierten Position vorgesehen. Als Feststellvorrichtung kann ebenfalls ein zweiter Linearaktuator verwendet werden. Das Aktuatorelement des zweiten Linearaktuators kann hierbei ebenfalls aus einer Formgedächtnislegierung bestehen.

Dann sollte der zweite Linearaktuator so eingebaut sein, daß der Linearaktuator entriegelt wird, wenn der zweite Linearaktuator erwärmt wird.

Vorzugsweise hat der Linearaktuator einen integrierten Positionssensor zum Bestimmen des Hubs des Linearaktuators.

Es ist weiterhin vorteilhaft, wenn das Gehäuse des Linearaktuators ebenfalls aus einer Formgedächtnislegierung besteht und die Länge des Gehäuses mittels der Formgedächtnislegierung veränderbar ist. Auf diese Weise kann ein kaskadierter Linearaktuator mit einem größeren Hub gebildet werden.

Die Erfindung wird nachfolgend anhand der beigefügten Zeichnungen näher erläutert. Es zeigen:
- Fig. 1 -: Querschnittsansicht eines Linearaktuators mit einem Aktuatorelement aus einer Formgedächtnislegierung;
- Fig. 2 -: Querschnittsansicht eines gebogenen Linearaktuators;
- Fig. 3 -: Querschnittsansicht eines gewendelten Linearaktuators;
- Fig. 4 -: Querschnittsansicht eines Linearaktuators mit integrierter Rückstell- und Feststellvorrichtung sowie mit Positionssensor;
- Fig. 5 -: Querschnittsansicht eines kaskadierten Linearaktuators.

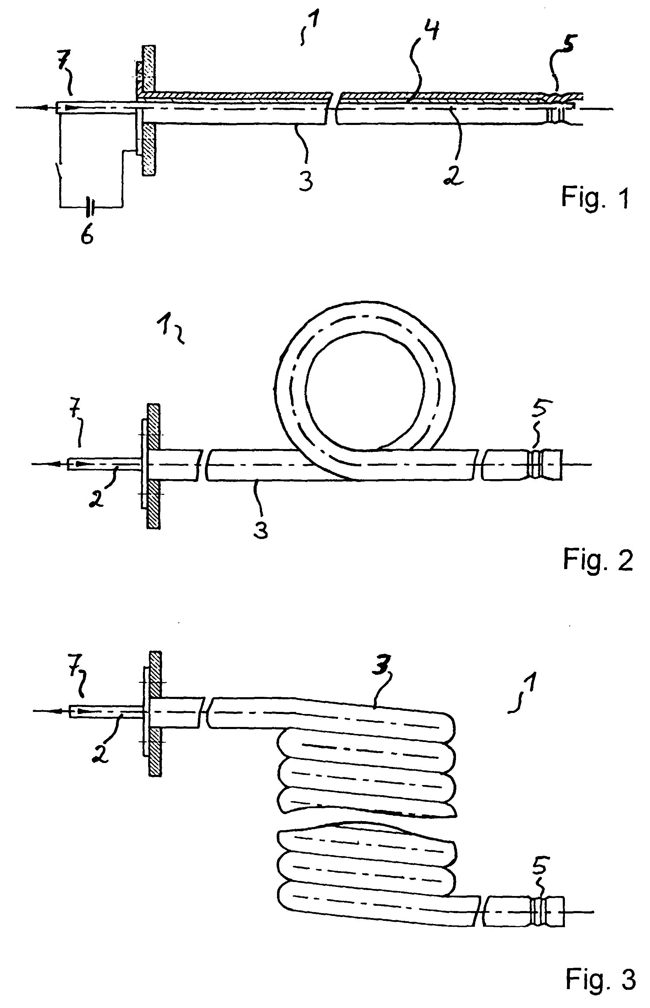

Die Fig. 1 läßt eine Querschnittsansicht eines Linearaktuators 1 erkennen, bei dem ein Aktuatorelement 2 aus einer Formgedächtnislegierung besteht und in einem Gehäuse 3 gelagert ist. Zwischen dem Gehäuse 3 und dem Aktuatorelement 2 ist eine Gleitlagerung 4 vorgesehen, die elektrisch isolierend wirkt. An einer Verbindungsstelle 5 ist das Aktuatorelement 2 mit dem Gehäuse 3 fest verbunden. Und auf der anderen Seite ist das Aktuatorelement 2 frei linear verschiebbar. Es ist eine Spannungsquelle 6 vorgesehen, um das Aktuatorelement 2 mit einer Spannung zu beaufschlagen und damit zu erwärmen. Die Spannungsquelle 6 ist schaltbar an das äußere frei bewegliche Ende 7 des Aktuatorelements 2 und an das Gehäuse 3 geklemmt. Der Strom wird hierbei durch das Gehäuse 3 über die Verbindungsstelle 5 auf das andere Ende 7 des Aktuatorelementes 2 geleitet, wobei die Gleitlagerung 4 als Isolation zwischen dem Gehäuse 3 und dem Aktuatorelement 2 dient.

Das Aktuatorelement 2 besteht aus einer Formgedächtnislegierung, d. h. aus einem speziellen metallischen Werkstoff, wie zum Beispiel einer Nickel-Titan- oder einer Kupfer-Aluminium-Legierung. Wenn ein Strom auf das Aktuatorelement 2 gegeben wird, wird dieses erwärmt und die Kristallstruktur verändert sich aufgrund der Temperaturänderung. Wenn die Temperatur eine kritische Umwandlungstemperatur Tₖ überschreitet erinnert sich die Formgedächtnislegierung an ihre ursprüngliche Form, die sie vor einem mechanischen Aufprägen einer bleibenden Verformung eingenommen hatte. Das Aktuatorelement 2 kennt somit zwei Zustände, die ursprüngliche Verformung sowie die mechanisch eingeprägte Verformung.

Die gleichzeitig als Isolierschicht dienende Gleitlagerung 4 sollte eine gute Isolierfähigkeit, eine Temperaturbeständigkeit und einen geringen Reibungskoeffizienten haben. Sie ist vorzugsweise aus Polytetraflourethylen (PTFE) gebildet.

Die Fig. 2 läßt einen gebogenen Linearaktuator 1 erkennen, bei dem das Gehäuse 3 zum Beispiel flexibel ausgeführt ist. Hierdurch können trotz großer Länge des Aktuatorelementes 2 kleine Einbautiefen erreicht werden.

Wie in der Fig. 3 skizziert ist, kann der Linearaktuator 1 auch gewendelt sein, wobei das Gehäuse 3 und das Aktuatorelement 2 spiralförmig aufgewendelt ist.

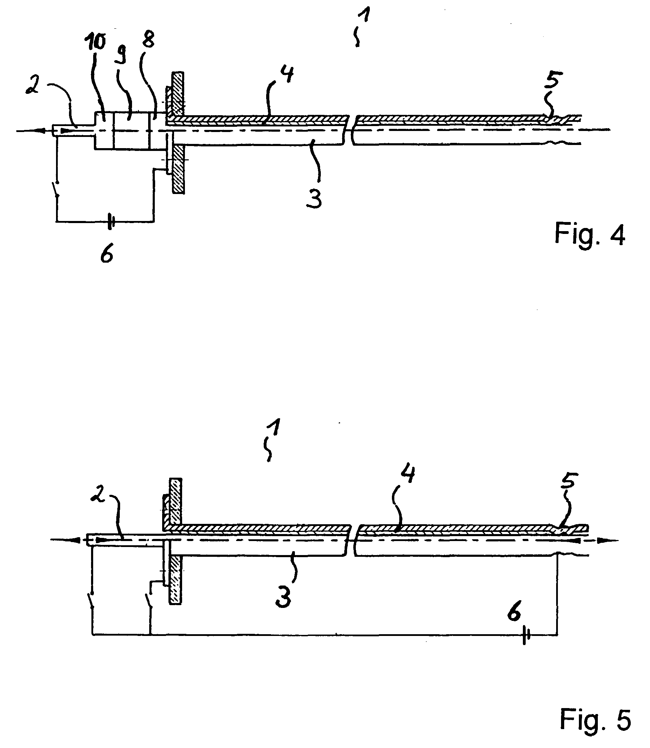

Die Fig. 4 läßt einen Linearaktuator 1 erkennen, bei dem zusätzlich eine Rückstellvorrichtung 8 und eine Feststellvorrichtung 9 sowie ein Positionssensor 10 integriert ist.

Das effektive Arbeitsvermögen einer Formgedächtnislegierung ist beim Einwegeffekt wesentlich größer als beim Zweiwegeffekt. Daher wird das Aktuatorelement 2 vorzugsweise nach dem Einwegeffekt betrieben. Hierzu wird dem Aktuatorelement 2 bei Umgebungstemperatur mechanisch eine bleibende Verformung aufgeprägt. Im Betrieb wird die Formgedächtnislegierung über die kritische Umwandlungstemperatur Tₖ aufgeheizt, so daß die Gefügeumwandlung stattfindet und die Formgedächtnislegierung sich an ihre ursprüngliche Form erinnert, die sie vor dem Aufprägen der bleibenden Verformung hatte. Bei Abkühlen des Aktuatorelementes 2 auf Raumtemperatur wird die zuvor mechanisch aufgeprägte Form jedoch nicht wieder eingenommen, sondern muß wiederum mechanisch aufgeprägt werden. Hierzu dient die Rückstellvorrichtung, die zum Beispiel als mechanische Feder oder als zweiter Linearaktuator ausgeführt sein kann.

Damit der Linearaktuator 1 eine bestimmte Position über eine längere Zeit halten kann, ohne daß das Aktuatorelement 2 beheizt werden muß, kann das Aktuatorelement 2 durch eine Feststellvorrichtung 9 blockiert werden. Dies kann ebenfalls ein Linearaktuator sein, der ein aus einer Formgedächtnislegierung bestehendes Aktuatorelement hat. Hierbei sollte der zweite Linearaktuator zur Entriegelung des Linearaktuators beheizt werden, so daß nur während der Verstellung bzw. Entriegelung eine Energiezufuhr notwendig ist und die neue Position des Linearaktuators energiefrei für eine unbestimmte Zeit gehalten werden kann.

Um die genaue Position des Aktuatorelements 2 bzw. des Hubs des Aktuatorabtriebs festzustellen, kann in bekannter Weise ein Positionssensor 10 in den Linearaktuator integriert werden.

Wie in der Fig. 4 skizziert ist, kann die Rückstellvorrichtung 8, die Feststellvorrichtung 9 und der Positionssensor 10 als eine kompakte Einheit an den Kopf des Gehäuses 3 montiert werden.

Die Fig. 5 läßt einen kaskadierten Linearaktuator 1 erkennen, der ähnlich wie der in der Fig. 1 dargestellte Linearaktuator 1 aufgebaut ist. Im Unterschied zu dem in der Fig. 1 gezeigten Linearaktuator 1 besteht das Gehäuse 3 auch aus einer Formgedächtnislegierung und kann an seinen beiden Enden schaltbar mit einer Spannung beaufschlagt werden. Hierdurch kann der Hub des Aktuatorelementes 2 vergrößert werden, indem durch Temperaturerhöhung des Aktuatorelementes 2 dieses ausgedehnt wird und das Gehäuse 3 gleichzeitig auf Umgebungstemperatur gebracht und damit zusammen gezogen wird. Um das Aktuatorelement 2 einzufahren, wird das Aktuatorelement 2 nicht erwärmt und statt dessen das Gehäuse 3 mit einer Spannung beaufschlagt und erwärmt, so daß sich das Aktuatorelement 2 zusammenzieht und das Gehäuse ausdehnt.

Der Linearaktuator 1 ist zum Beispiel für Landeklappen, als End- bzw. Verriegelungsmechanismus, zur Verstellung von Scheinwerfern, für temperaturgesteuerte Lüftungsklappen, für einen öltemperaturgesteuerten Öl- bzw. Kühlkreislauf etc. verwendbar. Der Linearaktuator 1 kann druckdicht montiert werden und in feuchten Umgebungen eingesetzt werden.

## Patentansprüche

1. Linearaktuator (1) mit einem länglichen Aktuatorelement (2), wobei das Aktuatorelement (2) zur Längenänderung aus einer Formgedächtnislegierung besteht, das Aktuatorelement (2) in einem Gehäuse (3) frei verschiebbar gelagert ist und nur an einer Verbindungsstelle (5) fest mit dem Gehäuse (3) verbunden ist, **dadurch gekennzeichnet, daß** sich das Gehäuse parallel in Längsrichtung zum Aktuatorelement (2) erstreckt und dieses allseitig umschließt, wobei eine Gleitlagerung (4) zur frei verschiebbaren Lagerung des Aktuatorelementes (2) in dem Gehäuse (3) vorgesehen ist.

2. Linearaktuator (1) nach Anspruch 1, **dadurch gekennzeichnet, daß** die Gleitlagerung (4) eine elektrischen Isolierschicht zwischen dem Aktuatorelement (2) und dem Gehäuse (3) bildet.

3. Linearaktuator (1) nach einem der vorhergehenden Ansprüche, **dadurch gekennzeichnet, daß** eine Heizeinrichtung vorgesehen ist, um die Länge des Aktuatorelementes (2) zu verändern.

4. Linearaktuator (1) nach Anspruch 3, **dadurch gekennzeichnet, daß** das Aktuatorelement (2) zur Erwärmung mit einer elektrischen Spannung beaufschlagbar ist, wobei an der Verbindungsstelle (5) eine elektrisch leitfähige Verbindung zwischen dem Aktuatorelement (2) und dem Gehäuse (3) vorgesehen ist und eine Spannung zwischen dem freien Ende (7) des Aktuatorelementes (2) und dem Gehäuse (3) angelegt wird, um das Aktuatorelement (2) zu erwärmen.

5. Linearaktuator (1) nach einem der vorhergehenden Ansprüche, **dadurch gekennzeichnet, daß** das Aktuatorelement (2) geradlinig ausgerichtet ist.

6. Linearaktuator (1) nach einem der Ansprüche 1 bis 5, **dadurch gekennzeichnet, daß** das Aktuatorelement (2) mindestens teilweise gebogen ist.

7. Linearaktuator (1) nach einem der vorhergehenden Ansprüche, **dadurch gekennzeichnet, daß** das Gehäuse (3) flexibel ist.

8. Linearaktuator (1) nach einem der vorhergehenden Ansprüche, **gekennzeichnet durch** eine Rückstellvorrichtung (8) zum mechanischen Rückstellen des Aktuatorelementes (2) in seine Ausgangsposition.

9. Linearaktuator (1) nach Anspruch 8, **dadurch gekennzeichnet, daß** die Rückstellvorrichtung (8) ein zweiter Linearaktuator ist.

10. Linearaktuator (1) nach Anspruch 8, **dadurch gekennzeichnet, daß** die Rückstellvorrichtung (8) eine mechanische Feder ist.

11. Linearaktuator (1) nach einem der vorhergehenden Ansprüche, **gekennzeichnet durch** eine Feststellvorrichtung (9) zum Halten bzw. Verriegeln des Linearaktuators (1) in einer definierten Position.

12. Linearaktuator (1) nach Anspruch 11, **dadurch gekennzeichnet, daß** die Feststellvorrichtung (9) durch einen zweiten Linearaktuator gebildet ist.

13. Linearaktuator (1) nach Anspruch 12, **dadurch gekennzeichnet, daß** der zweite Linearaktuator so angeordnet ist, daß der Linearaktuator (1) entriegelt wird, wenn der zweite Linearaktuator erwärmt wird.

14. Linearaktuator (1) nach einem der vorhergehenden Ansprüche, **gekennzeichnet durch** einen integrierten Positionssensor (10) zum Bestimmen des Hubs des Linearaktuators (1).

15. Linearaktuator (1) nach einem der vorhergehenden Ansprüche, **dadurch gekennzeichnet, daß** das Gehäuse (3) aus einer Formgedächtnislegierung besteht und die Länge des Gehäuses (3) mittels der Formgedächtnislegierung veränderbar ist.
